# EUROPÄISCHE PATENTSCHRIFT

(11) **EP 0 495 148 B1**
(45) Veröffentlichungstag und Bekanntmachung des Hinweises auf die Patenterteilung: **12.04.1995**
(21) Anmeldenummer: 91100597.3
(22) Anmeldetag: 18.01.1991
(51) Int. Cl.: G05B 19/4103

(54) **Steuerung zur Bewegungsführung eines Werkzeugs einer numerisch gesteuerten Maschine**
System to control the speed of a tool of a numerical controlled machine tool
Commande pour déterminer la vitesse d'avance d'un outil d'une machine à commande numérique

(43) Veröffentlichungstag der Anmeldung: 22.07.1992
(73) Patentinhaber: SIEMENS AKTIENGESELLSCHAFT, 80333 München (DE)
(72) Erfinder: Höhn, Georg, Dipl.-Ing., W-8551 Pinsberg (DE)

(56) Entgegenhaltungen:
- EP-A- 0 417 337
- US-A- 3 500 150

## Beschreibung

Wenn ein Werkzeug einer Werkzeugmaschine oder die Hand eines Roboters bewegt wird, sind daran im Regelfall eine Vielzahl von einzelnen Achsen beteiligt, so daß die resultierende Bewegungsbahn bzw. Bahnkurve sich aus deren überlagerten Einzelbewegungen ergibt. Diese komplexe Bewegung wird durch das jeweilige Programm einer die Werkzeugmaschine oder den Roboter steuernden numerischen Steuerung vorgegeben. Dabei wird diese Bewegung entsprechend der im Produktionsprozeß vorgesehenen regulären Geschwindigkeit des Systems ausgelegt. Die Bahnkurve wird dazu in eine Vielzahl von Bahnsegmenten eingeteilt, die durch jeweils zwei Interpolationspunkte begrenzt sind. Ein Bahnsegment wird dann in einer von der numerischen Steuerung vorgegebenen Systemtaktzeit abgefahren. Die Geschwindigkeit mit der ein Bahnsegment abgefahren wird, ergibt sich damit aus der Anzahl der Weginkremente, welche an die den Achsen zugeordneten Lageregeleinrichtungen gegeben werden, dividiert durch die Systemtaktzeit.

Für den Fall, daß die reguläre Geschwindigkeit reduziert werden soll, wenn beispielsweise für Testzwecke oder aus anderen Gründen einzelne Bewegungsvorgänge eines Roboters langsamer ablaufen sollen, kann die Geschwindigkeit über einen sogenannten Override-Geber modifiziert werden.

Aus der EP-A-340 538 ist ein Verfahren zur Vorgabe von Override-Verläufen bekannt, wobei das werkzeugführende Maschinenelement zunächst mit maximaler Geschwindigkeit bis zum Erreichen eines vorgegebenen Override-Wertes und danach mit der Override-Geschwindigkeit angetrieben wird. Diese unterschiedlichen Geschwindigkeitsstufen führen dazu, daß eine mit Override gefahrene Bahnkurve von der normalen Bahnkurve abweicht. Zur Kompensation dieser Abweichungen ist ein aufwendiges, steuerungsinternes Zeitdehnungsverfahren erforderlich, das zu einer Änderung des Interpolationstaktes entsprechend dem vorgegebenen Override-Wert führt.

Aufgabe der Erfindung ist es, eine bahngetreue Geschwindigkeitsänderung bei numerisch gesteuerten Maschinen zu erhalten.

Diese Aufgabe wird durch eine Steuerung zur Bewegungsführung eines Werkzeugs einer numerisch gesteuerten Maschine entlang einer vorgebbaren Bahnkurve mit folgenden Merkmalen gelöst:
a) Mitteln zur Interpolation der Bahnkurve durch eine Vielzahl von Bahnsegmenten, die in einem vorgegebenen Zeittakt abgefahren werden, wobei ein jeweiliges Bahnsegment durch jeweils zwei Interpolationspunkte vorgegeben wird,
b) Mitteln zur Eingabe eines Steuerparameters sowie Mitteln zur Erzeugung von Feininterpolationspunkten in Abhängigkeit von dem Steuerparameter,
c) Mitteln zur Bewegungsführung des Maschinenelementes von einem Interpolationspunkt oder Feininterpolationspunkt zum jeweils nachfolgenden Feininterpolationspunkt oder Interpolationspunkt.

Durch die Vorgabe von Feininterpolationspunkten zwischen den Interpolationspunkten ist sichergestellt, daß sich keine Abweichungen von der durch die Interpolationspunkte bereits vorgegebenen Bahnkurve ergeben. Die Systemtaktzeit braucht nicht geändert zu werden, um eine Geschwindigkeitsänderung zu bewirken. Die Geschwindigkeitsänderung ergibt sich automatisch dadurch, daß in der gleichen Taktzeit nicht mehr der Weg von Interpolationspunkt zu Interpolationspunkt sondern zum jeweils nächsten Interpolationspunkt bzw. Feininterpolationspunkt abgefahren wird.

Da die Berechnung der Feininterpolationspunkte im wesentlichen eine einfache Division der Inkremente zwischen zwei Interpolationspunkten durch den Steuerparameter umfaßt, kann sie in vorteilhafterweise während der Bewegungsführung des Werkzeugs, also On-line durchgeführt werden.

Es ist möglich, einen beliebigen Wert des Steuerparameters vorzugeben. Es ist jedoch vorteilhaft, wenn der Steuerparameter eine ganze Zahl ist und die Feininterpolationspunkte aus den jeweiligen Abständen zwischen benachbarten Interpolationspunkten, dividiert durch den Steuerparameter, berechnet werden. Der Rechenaufwand ist in diesem Fall geringer als bei Vorgabe eines beliebigen Wertes.

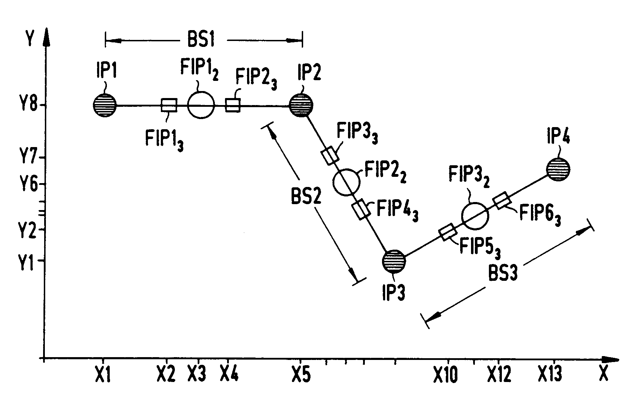

Ein Ausführungsführungsbeispiel der Erfindung wird im folgenden anhand der Zeichnung näher beschrieben.

Die Figur zeigt eine Bahnkurve mit Interpolations- und Feininterpolationspunkten.

Die Bahnkurve ist in drei Bahnsegmente BS1, BS2 und BS3 unterteilt, die jeweils durch die Interpolationspunkte IP1 und IP2, IP2 und IP3, IP3 und IP4 begrenzt sind. Die Bahnkurve liegt der Einfachheit halber in der XY-Ebene, es könnte sich jedoch auch um eine räumliche Bahnkurve handeln. Die Koordinaten der Interpolationspunkte IP1 bis IP4 lassen sich jeweils durch (X,Y) Wertepaare angeben.

Das Werkzeug einer numerisch gesteuerten Maschine wird im Normalfall, d.h. ohne Override-Vorgabe von einem Interpolationspunkt IP1 bis IP4 zum jeweils nächsten Interpolationspunkt IP1 bis IP4 linear geführt.

Als "Werkzeug" ist dabei jede Vorrichtung zu verstehen, die bei numerisch gesteuerten Maschinen zum abfahren einer Bahnkurve oder zur Punkt- zu Punkt-Bewegung eingesetzt wird. Das kann bei einer Werkzeugmaschine oder einem Roboter beispielsweise ein am Werkzeugschlitten oder an der Roboterhand befindliches Fräs-, Schleif- oder Bohrwerkzeug, etc. sein, das mit dem zu bearbeitenden Werkstück im Eingriff steht, es kann sich aber auch um eine Vorrichtung handeln, die eine Kontur - auch berührungslos - abtastet oder vermißt, etc. oder die für beliebige andere Zwecke einsetzbar ist.

Angenommen, die Strecke vom Interpolationspunkt IP1, also von den Koordinaten (X1,Y8) zum Interpolationspunkt IP2, also zu den Koordinaten (X5,Y8) beträgt 100 Inkremente (wobei ein Inkrement einer bestimmten Wegstrecke entspricht), so würde diese Strecke in der Systemtaktzeit von beispielsweise einer Sekunde abgefahren. Die Geschwindigkeit des Werkzeugs beträgt somit 100 Inkremente pro Sekunde.

Soll die Geschwindigkeit, mit der die Bahnkurve abgefahren werden soll, auf die Hälfte reduziert werden, so kann als Steuerparameter der Wert N = 2 vorgegeben werden, was einem Override von 50 % entspricht.

Aufgrund der Vorgabe des Override-Wertes werden von der numerischen Steuerung Feininterpolationspunkte FIP1₂, FIP2₂, FIP3₂ (der Index gibt den Wert des jeweiligen Steuerparameters an), die jeweils in der Mitte zwischen zwei Interpolationspunkten IP1 bis IP4 auf den Bahnsegmenten BS1, BS2, BS3 liegen und in der Figur mit weißen Kreisen gekennzeichnet sind. Die Wegstrecke von einem der Interpolationspunkte IP1 bis IP4 zu einem Feininterpolationspunkt FIP1₂ bis FIP3₂ und umgekehrt beträgt nun jeweils 50 Inkremente. Pro Systemzeittakt, im Beispiel also pro Sekunde werden nun nicht mehr 100 Inkremente sondern nur jeweils 50 Inkremente abgefahren, so daß sich die Bahngeschwindigkeit des Werkzeugs genau um die Hälfte reduziert hat.

Um die Geschwindigkeit auf ein Drittel zu reduzieren, wird ein Steuerparameter von N = 3 vorgegeben, was einem Override-Wert von 33 % entspricht. Damit werden von der numerischen Steuerung Feininterpolationspunkte FIP1₃ bis FIP6₃ berechnet. Diese Feininterpolationspunkte FIP1₃ bis FI6₃ sind in der Figur durch quadratische Kästchen gekennzeichnet. Die Entfernung der Feininterpolationspunkte FIP1₃ bis FIP6₃ von den jeweiligen Interpolationspunkten IP1 bis IP3 beträgt nun jeweils 33 bzw. 66 Inkremente. Da bei der Division von 100 Inkrementen durch den Steuerparameter N = 3 ein Rest verbleibt, betragen die Entfernungen von den Feininterpolationspunkten FIP2₃, FIP4₃ und FIP6₃ zu den Interpolationspunkten IP2, IP3 und IP4 jeweils 34 Inkremente, so daß diese Strecken mit einer nicht ins Gewicht fallenden höheren Geschwindigkeit abgefahren werden.

Dadurch, daß die vorher berechneten Interpolationspunkte IP1 bis IP4 - auch wenn bei Vorgabe eines Override-Werts Feininterpolationswerte FIP berechnet werden - auf jeden Fall angefahren werden, ist die Bahntreue des Verfahrens 100 % gewährleistet.

## Patentansprüche

1. Steuerung zur Bewegungsführung eines Werkzeugs einer numerisch gesteuerten Maschine entlang einer vorgebbaren Bahnkurve mit:
a) Mitteln zur Interpolation der Bahnkurve durch eine Vielzahl von Bahnsegmenten (BS), die in einem vorgegebenen Zeittakt abgefahren werden, wobei ein jeweiliges Bahnsegment (BS) durch jeweils zwei Interpolationspunkte (IP) vorgegeben wird,
dadurch gekennzeichnet, daß
b) Mittel zur Eingabe eines Steuerparameters (N) sowie Mittel zur Erzeugung von Feininterpolationspunkten (FIP) in Abhängigkeit von dem Steuerparameter (N), und
c) Mittel zur Bewegungsführung des Maschinenelements in dem vorgegebenen Zeittakt von einem Interpolationspunkt (IP) oder Feininterpolationspunkt (FIP) zum jeweils nachfolgenden Feininterpolationspunkt (FIP) oder Interpolationspunkt (IP) vorgesehen sind.

2. Steuerung nach Anspruch 1, **dadurch gekennzeichnet**, daß die Feininterpolationspunkte (FIP) während der Bewegungsführung des Werkzeugs erzeugt werden.

3. Steuerung nach einem der vorstehenden Ansprüche, **dadurch gekennzeichnet,** daß der Steuerparameter (N) eine ganze Zahl ist, wobei die Feininterpolationspunkte (FIP) aus den Abständen zwischen benachbarten Interpolationspunkten (IP), dividiert durch den Steuerparameter (N) berechnet werden.

## Claims

1. Control for guiding the movement of a tool of a numerically controlled machine along a specifiable trajectory curve, having:
a) means for interpolating the trajectory curve by a plurality of path segments (BS) which are travelled in a specified clock cycle, wherein a respective path segment (BS) is specified by two respective interpolation points (IP),
characterised in that there are provided
b) means for entering a control parameter (N) as well as means for generating fine interpolation points (FIP) in dependence upon the control parameter (N), and
(c) means for guiding the movement of the machine element, in the clock cycle provided, from one interpolation point (IP) or fine interpolation point (FIP) to the respective following fine interpolation point (FIP) or interpolation point (IP).

2. Control according to claim 1, characterised in that the fine interpolation points (FIP) are generated during guiding of the movement of the tool.

3. Control according to one of the preceding claims, characterised in that the control parameter (N) is an integral number, wherein the fine interpolation points (FIP) are calculated from the distances between adjacent interpolation points (IP), divided by the control parameter (N).

## Revendications

1. Commande pour le guidage de déplacement d'un outil d'une machine à commande numérique le long d'une trajectoire pouvant être prédéterminée, comportant
a) des moyens pour interpoler la trajectoire au moyen d'une multiplicité de segments de trajectoire (BS), qui sont parcourus à une cadence temporelle prédéterminée, un segment respectif (BS) de la trajectoire étant prédéterminé respectivement par deux points d'interpolation (FIP),
caractérisée par le fait que sont prévus
b) un moyen pour introduire un paramètre de commande (N) ainsi qu'un moyen pour produire des points d'interpolation précise (FIP) en fonction du paramètre de commande (N), et
c) un moyen pour réaliser le guidage en déplacement de l'élément de machine à la cadence temporelle prédéterminée depuis un point d'interpolation (IP) ou un point d'interpolation précise (FIP) au point d'interpolation précise (FIP) ou au point d'interpolation (IP), respectivement suivant.

2. Commande suivant la revendication 1, caractérisée par le fait que les points d'interpolation précise (FIP) sont formés pendant le guidage du déplacement de l'outil.

3. Commande suivant l'une des revendications précédentes, caractérisée par le fait que le paramètre de commande (N) est un nombre entier, les points d'interpolation précise (FIP) étant calculés à partir des distances entre des points d'interpolation voisins (IP), divisées par le paramètre de commande (N).
